# FASCICULE DE BREVET EUROPEEN

(11) **EP 4 347 400 B1**
(45) Date de publication et mention de la délivrance du brevet: **03.09.2025**
(21) Numéro de dépôt: 22730196.7
(22) Date de dépôt: 20.05.2022
(51) Int. Cl.: B64D 11/06

(54) **ASSISE DE SIEGE, NOTAMMENT DE SIEGE D'AVION, MUNIE D'UNE ZONE DE DEGAGEMENT POUR LE BASSIN**
SITZSCHALE, INSBESONDERE FÜR EINEN FLUGZEUGSITZ, MIT EINEM BECKENABSTANDSBEREICH
SEAT PAN, IN PARTICULAR FOR AN AIRCRAFT SEAT, PROVIDED WITH A CLEARANCE ZONE FOR THE PELVIS

(30) Priorité: 28.05.2021 FR 2105568
(43) Date de publication de la demande: 10.04.2024
(73) Titulaire: Safran Seats, 78370 Plaisir (FR)
(72) Inventeur: COQUART, Maxime, 77550 MOISSY-CRAMAYEL (FR); GUERRA, Daniele, 77550 MOISSY-CRAMAYEL (FR); GAJEWSKI, Jonathan, 77550 MOISSY-CRAMAYEL (FR); DEBAUGNIES, Alexandre, 77550 MOISSY-CRAMAYEL (FR); BATT, Jean-Roman, 77550 MOISSY-CRAMAYEL (FR)
(74) Mandataire: Marconnet, Sébastien
(86) Numéro de dépôt international: PCT/EP2022/063799
(87) Numéro de publication internationale: WO 2022/248370

(56) Documents cités:
- EP-A2- 0 372 338
- US-A1- 2017 080 832
- US-A1- 2018 290 754
- US-B2- 10 486 814
- US-B2- 9 840 170

## Description

La présente invention porte sur une assise de siège munie d'une zone de dégagement pour le bassin. L'invention trouve une application particulièrement avantageuse, mais non exclusive, avec tout type de sièges d'avion de type "économique", "classe affaires" et "première classe" ou "pilote" ainsi qu'avec les sièges d'hélicoptère ou tout autre engin volant.

De façon connue en soi, un siège est soumis à des tests de certification visant à contrôler le comportement mécanique du siège lors d'un choc. Suivant un test dynamique dit "14G-down", un mannequin installé sur le siège est soumis à une décélération verticale de 14G. Le test est validé si la charge lombaire subie par le mannequin est inférieure à un seuil S valant par exemple 1500 Ibf (soit 6672 N).

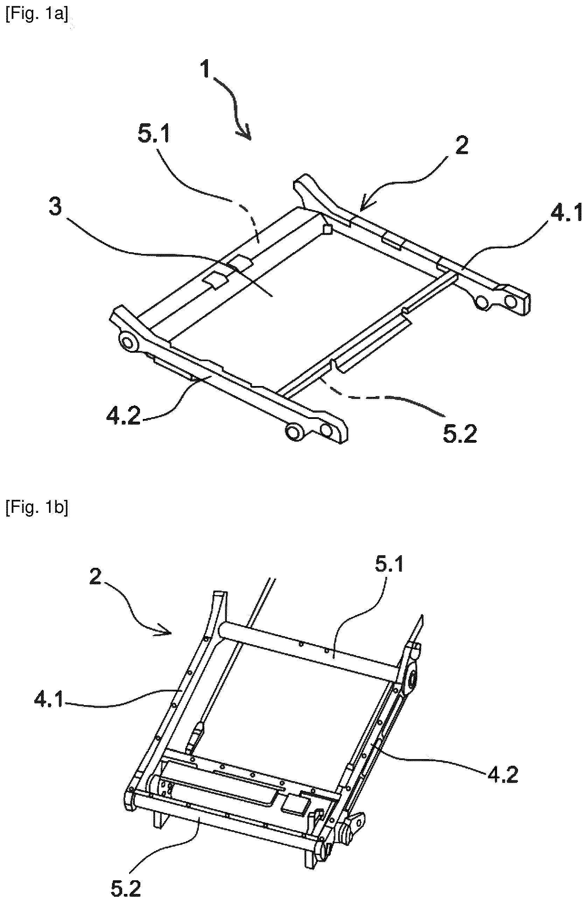

Une assise 1 standard d'un siège montrée sur la figure 1a comporte une structure d'assise 2 et une tôle d'assise 3 destinée à recouvrir la structure d'assise 2. La structure d'assise 2 montrée seule sur la figure 1b comporte deux longerons 4.1, 4.2 parallèles l'un par rapport à l'autre. Ces longerons 4.1, 4.2 sont reliés mécaniquement entre eux par des traverses 5.1, 5.2.

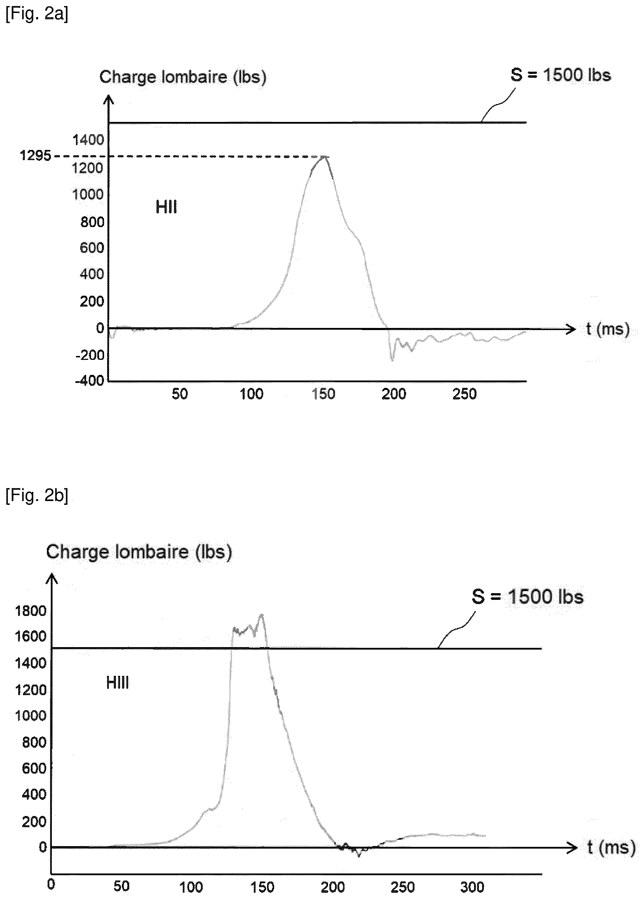

Comme cela est illustré par la figure 2a montrant l'évolution en fonction du temps de la charge lombaire observable lors d'un test "14G-down", une telle assise 1 passe sans difficulté le test de certification avec un mannequin dit de "type HII". Un tel mannequin de type HII qui présente une hauteur en position assise de l'ordre de 90cm et une masse de l'ordre de 74kg était jusqu'alors le standard de la certification.

Avec l'évolution de morphologie de la population, les règles de certification ont été modifiées avec l'utilisation d'un mannequin de type HIII plus lourd que le mannequin de type HII. En effet, le mannequin de type HIII présente une hauteur en position assise de l'ordre de 87cm et une masse de l'ordre de 78kg. Or, ce changement de gabarit du mannequin a une influence sur le comportement dynamique des sièges lors d'un test "14G-down", si bien que la charge lombaire subie par le mannequin dépasse la charge admissible seuil de 1500lbf, tel que cela est illustré par la figure 2b. La différence entre la charge lombaire subie par un mannequin de type HII et un mannequin de type HIII est de l'ordre de 300lbf.

Après des analyses détaillées de ce phénomène, l'entité inventive a mis en évidence que cette augmentation de la charge lombaire est due essentiellement au fait que le bassin du mannequin de type HIII plus large que celui du mannequin de type HII entre en contact avec les longerons de l'assise lors du test.

Le document US9840170 décrit un siège adapté aux automobiles de type sport avec un point de hanche bas. Une structure d'absorption d'énergie disposée dans un cadre de coussin est constituée d'un corps de cadre sensiblement carré comprenant une poutre avant et une poutre arrière, et des longerons pontés entre eux et disposés séparément des cadres latéraux.

Le document US20170080832 décrit une structure de siège ayant une structure de renforcement en forme de cadre sensiblement rectangulaire placée dans une zone où des cadres latéraux de partie coussin et des cadres latéraux de partie arrière sont couplés les uns aux autres par l'intermédiaire de mécanismes d'inclinaison, depuis une zone située à proximité des parties arrière des cadres latéraux de partie coussin jusqu'à une zone située à proximité des parties inférieures des cadres latéraux de la partie arrière.

L'invention vise notamment à remédier efficacement à cet inconvénient en proposant une assise de siège comportant une structure d'assise comprenant:
- un premier longeron comportant une portion d'extrémité avant et une portion d'extrémité arrière,
- un deuxième longeron comportant une portion d'extrémité avant et une portion d'extrémité arrière,
- une traverse avant reliant mécaniquement entre elles la portion d'extrémité avant du premier longeron et la portion d'extrémité avant du deuxième longeron, et
- une traverse arrière reliant mécaniquement entre elles la portion d'extrémité arrière du premier longeron et la portion d'extrémité arrière du deuxième longeron,
- chaque longeron comportant en outre une portion distale s'étendant entre la portion d'extrémité avant et la portion d'extrémité arrière correspondantes,
- un écart entre le premier longeron et le deuxième longeron mesuré entre les portions distales étant supérieur à un écart entre le premier longeron et le deuxième longeron mesuré entre les portions d'extrémité avant et/ou à un écart entre le premier longeron et le deuxième longeron mesuré entre les portions d'extrémité arrière,
- chaque portion distale étant reliée à une portion d'extrémité correspondante d'un longeron par l'intermédiaire d'une portion de liaison,
- une plateforme étant liée mécaniquement à une portion distale correspondante,
- ladite plateforme étant située dans un espace de dégagement délimité par une portion distale ainsi que par les portions de liaison situées à chaque extrémité de ladite portion distale.

L'invention permet ainsi, en prévoyant un écart augmenté entre les portions distales par rapport au reste de l'assise, d'autoriser le bassin du mannequin de type HIII à passer entre les longerons de l'assise lors du test "14G-down". L'invention permet ainsi de soulager la charge lombaire subie par le mannequin lors du test "14G-down" de façon à pouvoir le valider.

Selon une réalisation de l'invention, ladite assise comporte en outre un tube absorbeur d'énergie cinétique s'étendant entre le premier longeron et le deuxième longeron.

Selon une réalisation de l'invention, une première extrémité du tube absorbeur d'énergie cinétique est liée mécaniquement au premier longeron et une deuxième extrémité du tube absorbeur d'énergie cinétique est liée mécaniquement au deuxième longeron.

Selon une réalisation de l'invention, le tube absorbeur d'énergie cinétique est disposé en partie haute des portions d'extrémité arrière des longerons.

Selon une réalisation de l'invention, le tube absorbeur d'énergie cinétique est un tube creux réalisé dans un matériau métallique, tel que de l'acier ou de l'aluminium.

Selon une réalisation de l'invention, le tube absorbeur d'énergie cinétique comporte une pluralité de rainures.

Selon une réalisation de l'invention, la plateforme s'étend dans un prolongement longitudinal de la portion d'extrémité avant et de la portion d'extrémité arrière d'un longeron correspondant.

Selon une réalisation de l'invention, ladite assise comporte en outre une tôle d'assise recouvrant au moins en partie une surface d'assise délimitée par le premier longeron et le deuxième longeron ainsi que par la traverse avant et la traverse arrière.

Selon une réalisation de l'invention, la tôle d'assise porte au moins un raidisseur s'étendant suivant une direction parallèle aux traverses.

Selon une réalisation de l'invention, le raidisseur est constitué par une pièce pliée suivant une forme en U ou en oméga.

Selon une réalisation de l'invention, la tôle d'assise comporte au moins un dispositif d'encliquetage destiné à coopérer avec une traverse.

Selon une réalisation de l'invention, chaque dispositif d'encliquetage comporte deux pattes élastiquement déformables délimitant une gorge destinée à recevoir une traverse.

Selon une réalisation de l'invention, la tôle d'assise porte au moins une pièce de butée destinée à venir en appui contre une traverse lorsque l'assise est soumise à un choc vertical.

L'invention concerne en outre un siège comportant une assise telle que précédemment définie.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1a] La figure 1a, déjà décrite, est une vue en perspective d'une assise de siège d'avion selon l'état de la technique;
[Fig. 1b] La figure 1b, déjà décrite, est une vue en perspective d'une structure d'assise de siège d'avion selon l'état de la technique;
[Fig. 2a] La figure 2a, déjà décrite, est une représentation graphique de l'évolution en fonction du temps de la charge lombaire observable lors d'un test "14G-down" pour un mannequin de type HII installé sur un siège comportant l'assise de la figure 1a;
[Fig. 2b] La figure 2b, déjà décrite, est une représentation graphique de l'évolution en fonction du temps de la charge lombaire observable lors d'un test "14G-down" pour un mannequin de type HIII installé sur un siège comportant l'assise de la figure 1a;
[Fig. 3a] [Fig. 3b] Les figures 3a et 3b sont des vues en perspective respectivement de dessus et de dessous d'une assise de siège d'avion selon la présente invention;
[Fig. 4a] [Fig. 4b] [Fig. 4c] Les figures 4a, 4b, et 4c montrent respectivement une vue en perspective, une vue de dessus, et une vue de côté d'une structure d'assise de siège d'avion selon la présente invention;
[Fig. 5] La figure 5 est une représentation graphique d'une charge lombaire maximale observable lors d'un test "14G-down" effectué avec un mannequin de type HIII en fonction d'une longueur de décrochement au niveau d'une portion distale de chaque longeron;
[Fig. 6] La figure 6 est une vue en perspective d'un siège d'avion comportant une assise selon la présente invention;
[Fig. 7] La figure 7 illustre la modélisation d'un système "siège-mannequin" par un système de type "masse-ressort" dans le cadre d'un test "14G-down",
[Fig. 8] La figure 8 est une représentation graphique de l'évolution en fonction du temps de la charge lombaire observable lors d'un test "14G-down" pour un mannequin de type HIII installé sur un siège muni d'une assise selon l'invention intégrant un tube absorbeur d'énergie cinétique et pour un mannequin de type HIII installé sur une assise dépourvue de tube absorbeur d'énergie cinétique;
[Fig. 9] La figure 9 est une courbe d'effort en fonction d'un niveau de déformation d'un tube absorbeur d'énergie cinétique intégré à l'assise selon la présente invention;
[Fig. 10] La figure 10 est une courbe d'énergie absorbée en fonction d'un niveau de déformation d'un tube absorbeur d'énergie cinétique intégré à l'assise selon la présente invention.

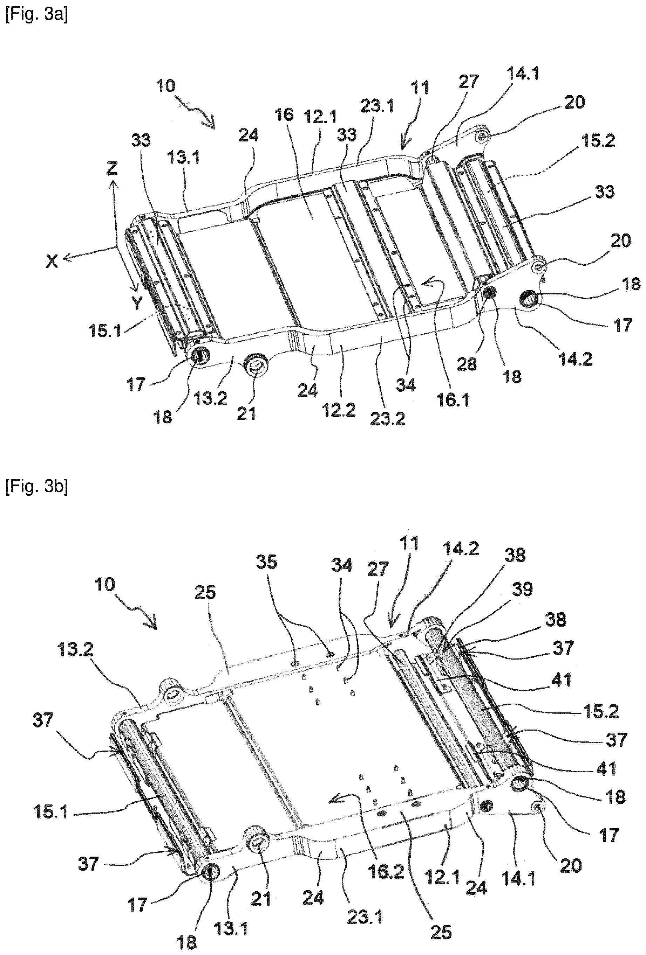

Il est à noter que, sur les figures 3a, 3b, et suivantes, les éléments structurels et/ou fonctionnels communs aux différents modes de réalisation présentent la même référence. Ainsi, sauf mention contraire, de tels éléments disposent de propriétés structurelles, dimensionnelles et matérielles identiques.

Par ailleurs, dans la suite de la description, les termes relatifs du type "avant", "arrière", "horizontal", "vertical", sont entendus par référence au sens commun que leur donnerait un passager assis sur un siège comportant l'assise selon l'invention. En particulier, un élément "arrière" de l'assise est situé du côté du dossier tandis qu'un élément "avant" est situé du côté opposé au dossier. Une orientation d'arrière vers l'avant de l'assise correspond à une orientation de droite vers la gauche sur les figures 3a et 3b.

On définit également une direction axiale X de l'assise parallèle aux longerons, une direction transversale Y située dans un plan horizontal et perpendiculaire à la direction X, ainsi qu'une direction verticale Z perpendiculaire au plan formé par les axes X et Y.

Les figures 3a et 3b montrent une assise 10 de siège d'avion, comportant une structure d'assise 11 et une tôle d'assise 16 destinée à recouvrir la structure d'assise 11.

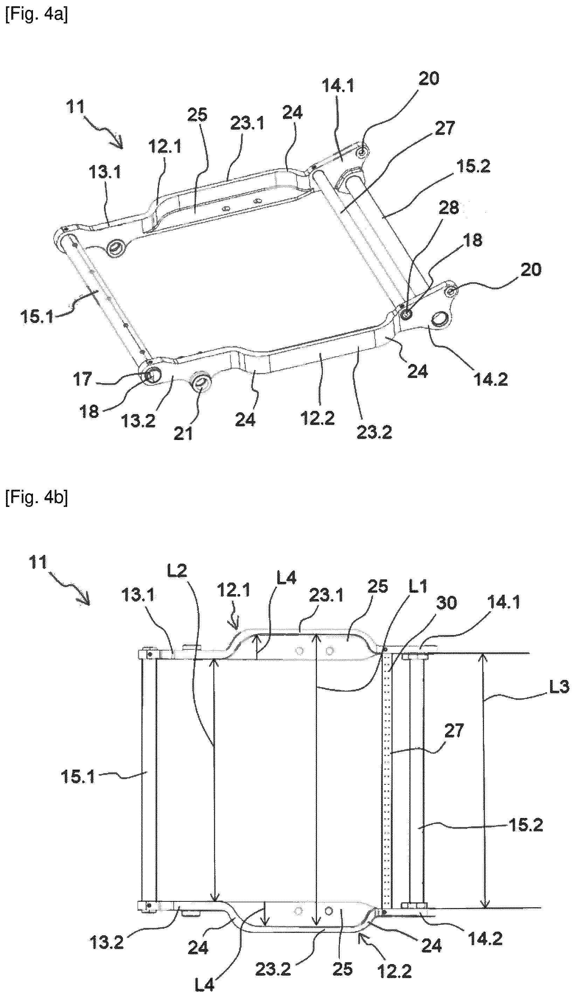

Plus précisément, comme on peut le voir sur les figures 4a à 4c, la structure d'assise 11 comporte un premier longeron 12.1 et un deuxième longeron 12.2. Le premier longeron 12.1 présente une portion d'extrémité avant 13.1 et une portion d'extrémité arrière 14.1. Le deuxième longeron 12.2 présente une portion d'extrémité avant 13.2 et une portion d'extrémité arrière 14.2.

Une traverse avant 15.1 relie mécaniquement entre elles la portion d'extrémité avant 13.1 du premier longeron 12.1 et la portion d'extrémité avant 13.2 du deuxième longeron 12.2. Une traverse arrière 15.2 relie mécaniquement entre elles la portion d'extrémité arrière 14.1 du premier longeron 12.1 et la portion d'extrémité arrière 14.2 du deuxième longeron 12.2.

Les liaisons mécaniques entre les longerons 12.1, 12.2 et les traverses 15.1, 15.2 pourront être effectuées au moyen de goupilles, rivets, vis, ou tout autre dispositif de fixation adapté à l'application. Dans l'exemple représenté, une traverse 15.1, 15.2 pénètre à l'intérieur d'un trou 17 de forme correspondante ménagé dans une portion d'extrémité d'un longeron 12.1, 12.2. Afin d'immobiliser en translation une traverse 15.1, 15.2 par rapport aux longerons 12.2, 12.2, une goupille 18 est insérée à chaque extrémité de la traverse 15.1, 15.2. Une goupille 18 s'étend avantageusement dans un plan perpendiculaire à une direction d'allongement longitudinal d'une traverse 15.1, 15.2. Les goupilles 18 sont avantageusement des goupilles de type élastique.

Par ailleurs, les longerons 12.1, 12.2 comportent du côté des portions d'extrémité arrière 14.1, 14.2 une interface de fixation 20 avec un dossier du siège. L'interface de fixation 20 pourra comporter un trou destiné à être disposé entre deux bras troués d'une chape de la structure du dossier. La liaison de l'ensemble pourra par exemple être assurée au moyen d'une vis épaulée coopérant avec un écrou correspondant ou avec un taraudage ménagé dans le trou d'un des bras de la chape de la structure de dossier (non représentée).

Les longerons 12.1, 12.2 comportent du côté des portions d'extrémité avant 13.1, 13.2 une interface de fixation 21 avec un élément d'une structure de siège, notamment un berceau. L'interface de fixation 21 pourra comporter un trou de passage d'une tige formant un axe de rotation de l'assise 10 par rapport à la structure de siège.

Avantageusement, comme cela est bien visible sur les figures 4a et 4b, chaque longeron 12.1, 12.2 comporte en outre une portion distale 23.1, 23.2 s'étendant entre la portion d'extrémité avant 13.1, 13.2 et la portion d'extrémité arrière 14.1, 14.2 correspondantes. Le longeron 12.1 comporte ainsi la portion distale 23.1 s'étendant entre la portion d'extrémité avant 13.1 et la portion d'extrémité arrière 14.1. Le longeron 12.2 comporte la portion distale 23.2 s'étendant entre la portion d'extrémité avant 13.2 et la portion d'extrémité arrière 14.2.

Un écart L1 entre le premier longeron 12.1 et le deuxième longeron 12.2 mesuré entre les portions distales 23.1, 23.2 est supérieur à un écart L2 entre le premier longeron 12.1 et le deuxième longeron 12.2 mesuré entre les portions d'extrémité avant 13.1, 13.2 et/ou à un écart L3 mesuré entre les portions d'extrémité arrière 14.1, 14.2. En l'occurrence, l'écart L1 est supérieur à l'écart L2. L'écart L1 est également supérieur à l'écart L3. Chaque portion distale 23.1, 23.2 s'étend sur au moins 20% de la longueur totale du longeron 12.1, 12.2 correspondant. L'écart L2 ou L3 est par exemple de l'ordre de 36cm.

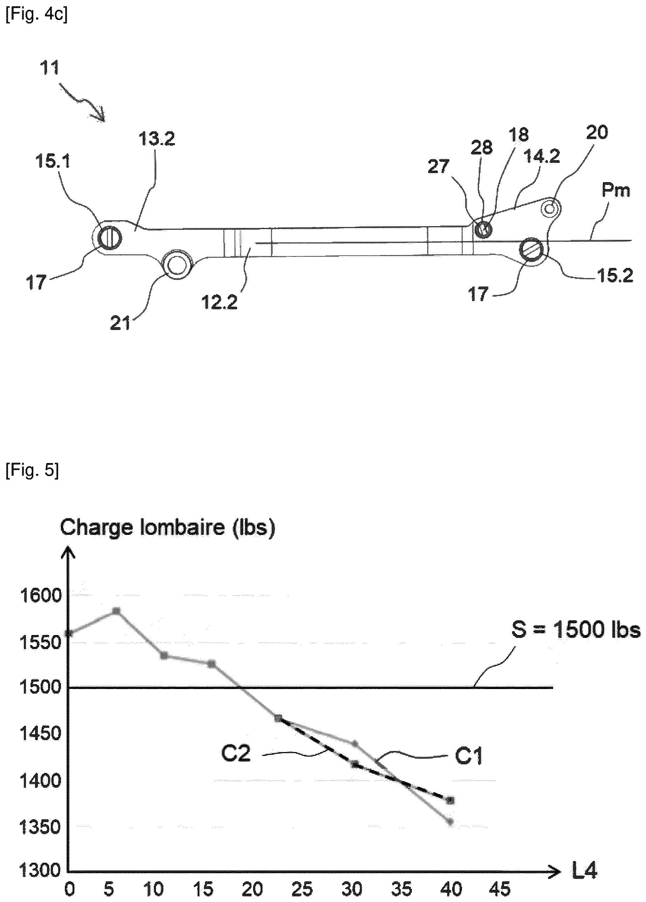

La figure 5 montre une évolution de la charge lombaire en fonction d'une évolution d'une longueur de décrochement L4 d'une portion distale 23.1, 23.2 de chaque longeron 12.1, 12.2 par rapport à un bord interne d'une portion d'extrémité avant 13 (cf. figure 4b). Cette figure met en évidence que plus le décrochement L4 est important, plus la charge lombaire subie par le mannequin diminue. En effet, l'écartement entre les deux longerons 12.1, 12.2 permet au bassin de passer entre les longerons 12.1, 12.2. La courbe C1 a été obtenue sans modification de raideur de l'assise 10 et la courbe C2 représentée en traits discontinus a été obtenue avec une modification de raideur de l'assise via l'intégration d'un tube absorbeur d'énergie cinétique décrit plus en détails ci-après.

En variante, un des écarts L2 ou L3 pourra être égal à l'écart L1, notamment dans le cas où les portions distales 23.1, 23.2 se situent dans un prolongement des portions d'extrémité avant 13.1, 13.2 ou des portions d'extrémité arrière 14.1, 14.2.

Une portion distale 23.1, 23.2 est reliée à une portion d'extrémité 13.1, 13.2 ou 14.1, 14.2 correspondante d'un longeron par l'intermédiaire d'une portion de liaison 24, tel que montré sur les figures 4a et 4b. Dans l'exemple représenté, une portion de liaison 24 présente une forme arrondie ayant un point d'inflexion correspondant à un changement de sens de la courbure. Une portion de liaison 24 présente ainsi globalement une forme en S aplati. En variante, une portion de liaison 24 pourra présenter une forme de rampe formant un angle de l'ordre de 45 degrés par rapport à une portion d'extrémité.

Les portions distales 23.1, 23.2 du premier longeron 12.1 et du deuxième longeron 12.2 présentent une forme rectiligne. En variante, les portions distales 23.1, 23.2 pourront présenter des formes en arc de cercle ou toute autre forme permettant de créer un écart augmenté entre les deux longerons 12.1, 12.2.

Par ailleurs, une plateforme 25 est liée mécaniquement à une portion distale 23.1, 23.2 correspondante. Une plateforme 25 s'étend dans un prolongement longitudinal de la portion d'extrémité avant 13.1, 13.2 et de la portion d'extrémité arrière 14.1, 14.2 d'un longeron 12.1, 12.2 correspondant. Une plateforme 25 est située dans un espace de dégagement délimité par une portion distale 23.1, 23.2 ainsi que les portions de liaison 24 situées à chaque extrémité de la portion distale 23.1, 23.2. Une plateforme 25 forme une zone d'appui pour un raidisseur d'assise décrit plus en détail ci-après. Une plateforme 25 présente une épaisseur réduite par rapport à celle des longerons 12.1, 12.2.

Avantageusement, les longerons 12.1, 12.2 et les traverses 15.1, 15.2 sont réalisés dans un matériau métallique. Suivant un exemple de réalisation, les longerons 12.1, 12.2 pourront être réalisés en aluminium, tandis que les traverses 15.1, 15.2 prennent la forme de tube réalisés en acier. En variante, les longerons 12.1, 12.2 et les traverses 15.1, 15.2 sont réalisés dans un même matériau métallique. Alternativement, les longerons 12.1, 12.2 et les traverses 15.1, 15.2 pourront être réalisés dans un matériau autre que du métal, tel qu'un matériau composite chargé par des fibres, ou tout autre matériau adapté à l'application.

Par ailleurs, comme on peut le voir sur les figures 3b et 4a, un tube 27 absorbeur d'énergie cinétique s'étend entre le premier longeron 12.1 et le deuxième longeron 12.2. Une première extrémité du tube 27 est liée mécaniquement au premier longeron 12.1 et une deuxième extrémité du tube 27 est liée mécaniquement au deuxième longeron 12.2.

Les extrémités du tube 27 sont de préférence liées aux portions d'extrémité arrière 14.1, 14.2 du premier longeron 12.1 et du deuxième longeron 12.2. Comme pour la liaison entre les traverses 15.1, 15.2 et les longerons 12.1, 12.2, la liaison mécanique du tube 27 avec les longerons 12.1, 12.2 pourra être effectuée au moyen de goupilles 18 traversant de part en part le tube 27 inséré dans des trous de réception 28 ménagés dans les longerons 12.1, 12.2. Les goupilles 18 s'étendent dans un plan perpendiculaire à une direction d'allongement longitudinal du tube 27. En variante, la liaison mécanique pourra être réalisée au moyen de vis, de rivets, par soudage ou tout autre moyen de fixation adapté à l'application.

Le tube 27 vise à absorber par déformation mécanique au moins une partie d'une énergie cinétique du mannequin lors d'un test "14G-down".

Avantageusement, le tube 27 est réalisé dans un matériau métallique, tel que de l'acier ou de l'aluminium. Le tube 27 est un tube creux dont une épaisseur pourra être adaptée en fonction de la rigidité souhaitée. L'épaisseur du tube 27 est notamment adaptée en fonction du matériau choisi.

Suivant un exemple de réalisation, le tube 27 est un tube réalisé en acier présentant une épaisseur de l'ordre de 2mm et un diamètre de l'ordre de 14mm. Par "de l'ordre de", on entend une variation possible de 10% autour de la valeur indiquée. Le tube 27 présente ici une section ronde mais il pourrait en variante présenter une section de forme carrée, rectangulaire, triangulaire, ovale, ou toute autre forme géométrique adaptée à l'application.

Avantageusement, comme on peut le voir sur la figure 4c, le tube 27 est disposé en partie haute des portions d'extrémité arrière 14.1, 14.2, c'est-à-dire que le tube 27 est disposé de préférence au-dessus d'un plan horizontal médian Pm des longerons 12.1, 12.2. Cela permet de réduire la distance initiale séparant le bassin du mannequin et le tube 27 constituant le premier élément rigide de l'assise 10 sur le chemin d'effort. On réduit ainsi la vitesse du bassin pendant la décélération et donc l'énergie cinétique à dissiper.

Le tube 27 absorbeur d'énergie cinétique permet également de détourner le bassin du mannequin de sa trajectoire verticale lors d'un test "14G-down" en créant une composante de vitesse suivant l'axe X. On réduit ainsi l'énergie à absorber par le tube 27 suivant la direction verticale Z.

Suivant un mode de réalisation particulier représenté sur la figure 4b, le tube 27 absorbeur d'énergie cinétique pourra comporter une pluralité de rainures 30. Une rainure 30 est réalisée suivant une direction perpendiculaire à un axe du tube 27. Une telle configuration permet d'affaiblir mécaniquement le tube 27 de façon à autoriser plus de déformation du tube 27.

Comme on peut le voir sur les figures 3a et 3b, la tôle d'assise 16 recouvre au moins en partie la surface d'assise délimitée par le premier longeron 12.1 et le deuxième longeron 12.2 ainsi que par la traverse avant 15.1 et la traverse arrière 15.2. La tôle d'assise 16 présente une face supérieure 16.1 contre laquelle pourra être plaqué un coussin d'assise et une face inférieure 16.2 opposée à la face supérieure. La tôle d'assise 16 est réalisée dans un matériau métallique ayant une épaisseur comprise entre 0.5mm et 1.5mm et valant de préférence de l'ordre de 0.8mm.

La tôle d'assise 16 porte au moins un raidisseur 33 s'étendant suivant une direction parallèle aux traverses 15.1, 15.2. Un raidisseur 33 s'étend de préférence suivant toute la largeur de la tôle d'assise 16. Un raidisseur 33 pourra être formé par une pièce en tôle pliée suivant une forme en U ou en oméga. En l'occurrence, la tôle d'assise 16 comporte trois raidisseurs 33 disposés respectivement en partie avant, en partie arrière, et dans une partie intermédiaire de la tôle d'assise 16. Les raidisseurs 33 sont solidarisés avec la face supérieure de l'assise 10 au moyen de plots de fixation 34 traversants.

Le raidisseur intermédiaire 33 présente des extrémités venant chacune en appui contre une plateforme 25 correspondante. Le raidisseur intermédiaire 33 présente une longueur sensiblement égale à l'écart L1. La plateforme 25 pourra comporter des trous 35 pour le passage des plots de fixation 34 du raidisseur intermédiaire 33, tel que montré sur la figure 3b.

Afin de permettre un démontage aisé de la tôle d'assise 16 pour accéder à une cinématique disposée sous le siège, la tôle d'assise 16 comporte au moins un, ici deux dispositifs d'encliquetage 37 destinés à coopérer respectivement avec la traverse avant 15.1 et la traverse arrière 15.2 du siège. A cet effet, chaque dispositif d'encliquetage 37 comporte deux pattes 38 élastiquement déformables délimitant une gorge 39 destinée à recevoir une traverse 15.1, 15.2 correspondante. Les pattes 38 pourront comporter des pentes à chacune de leur extrémité libre pour faciliter l'insertion de la traverse. Les pattes 38 présentent ainsi une forme en oméga (Ω). Il est également possible d'intégrer des charnières pour faciliter le déplacement de la tôle d'assise 16 par rapport à la structure d'assise 11.

Comme on peut le voir sur la figure 3b, la tôle d'assise 16 porte également au moins une pièce de butée 41 destinée à venir en appui contre une traverse lorsque l'assise 10 est soumise à un choc vertical. La pièce de butée 41 est fixée sur la face inférieure 16.2 de l'assise 10. La pièce de butée 41 vise à retenir la tôle d'assise 16 pour éviter son effondrement vertical lors d'un choc. Dans l'exemple représenté, l'assise 10 comporte deux pièces de butée 41 destinées à venir en appui contre la traverse arrière 15.2 lors d'un déplacement vers le bas de la tôle d'assise 16 subissant un choc vertical.

Une pièce de butée 41 pourra présenter une forme en L tournée vers la traverse arrière 15.2. La portion d'extrémité repliée du L pourra ainsi venir en appui contre la traverse arrière 15.2 lors du déplacement de la tôle d'assise 16 vers le bas. Lorsque la tôle d'assise 16 n'est pas déformée, la pièce de butée 41 est située à distance de la traverse 15.2 contre laquelle la pièce de butée 41 est destinée à venir en appui suite à une déformation vers le bas de la tôle d'assise 16.

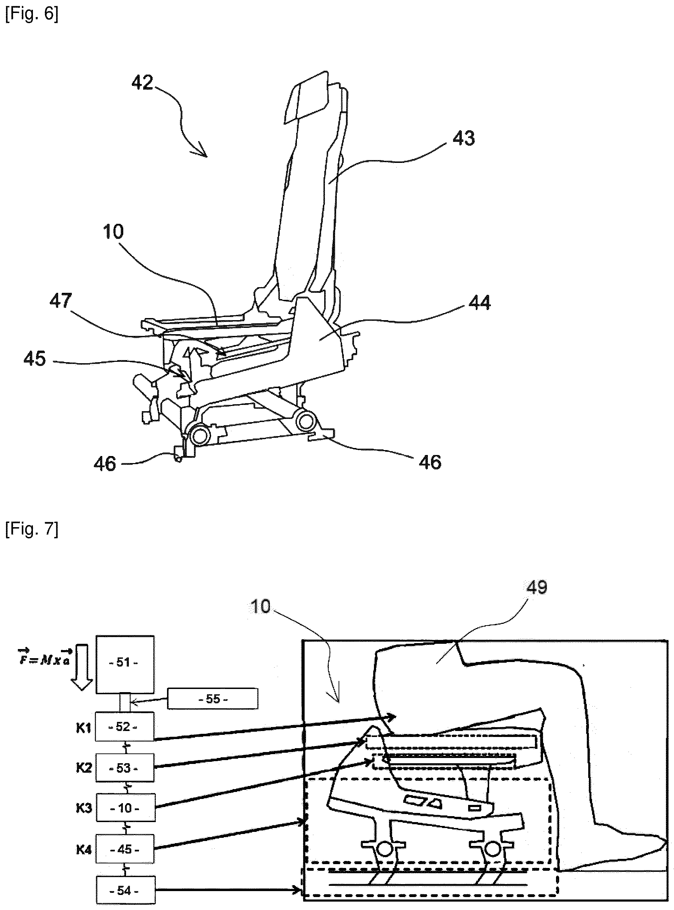

La figure 6 montre un siège d'avion 42 comportant une assise 10 selon l'invention ainsi qu'un dossier 43. L'assise 10 est montée sur un berceau 44 associé à une structure basse 45 munie de verrous 46 permettant de fixer le siège 42 sur des rails d'une cabine d'avion.

Le siège 42 est avantageusement pourvu d'une cinématique 47 portée par la structure basse 45 de siège 42. Cette cinématique 47 permet de déplacer l'assise 10 et le dossier 43 du siège 42 entre une position "assise", dans laquelle le siège 42 est configuré pour définir une position assise d'un passager, et une position "allongée", dans laquelle le siège 42 est configuré pour définir une surface de couchage du passager, avantageusement sensiblement horizontale. Des positions intermédiaires de confort sont aussi proposées, telles que la position "relax" dans laquelle le dossier 43 est fortement incliné.

Afin de prévoir le comportement dynamique du siège 42 lors d'un test "14G down", le système "siège 42-mannequin 49" montré sur la figure 7 est modélisé par un système de type "masse-ressort". On considère ainsi que l'ensemble 51 formé par la tête et les épaules d'un mannequin 49 de type HIII a une masse de l'ordre de 35kg, et que le bassin 52 a une masse de l'ordre de 12kg et une raideur K1 prédéterminée de l'ordre de 300N/mm. Un coussin d'assise 53 a une raideur K2 de l'ordre de 100N/mm, tandis que l'assise 10 a une raideur K3 à optimiser. La structure basse 45 présente une raideur K4 de l'ordre de 600N/mm. On considère que le plancher de l'avion 54 sur lequel le siège 42 est monté via des rails de fixation présente une raideur infinie. La charge lombaire est mesurée au moyen d'un capteur 55 disposé au niveau de la colonne vertébrale au-dessus du bassin du mannequin 49. La force F subie est égale au produit de la masse M et de la décélération a.

En adaptant la configuration (matériau et dimensions) du tube 27 absorbeur d'énergie cinétique, il est possible d'adapter le coefficient K3 de l'assise 10 de façon à minimiser la charge lombaire subie par le mannequin 49 lors du test.

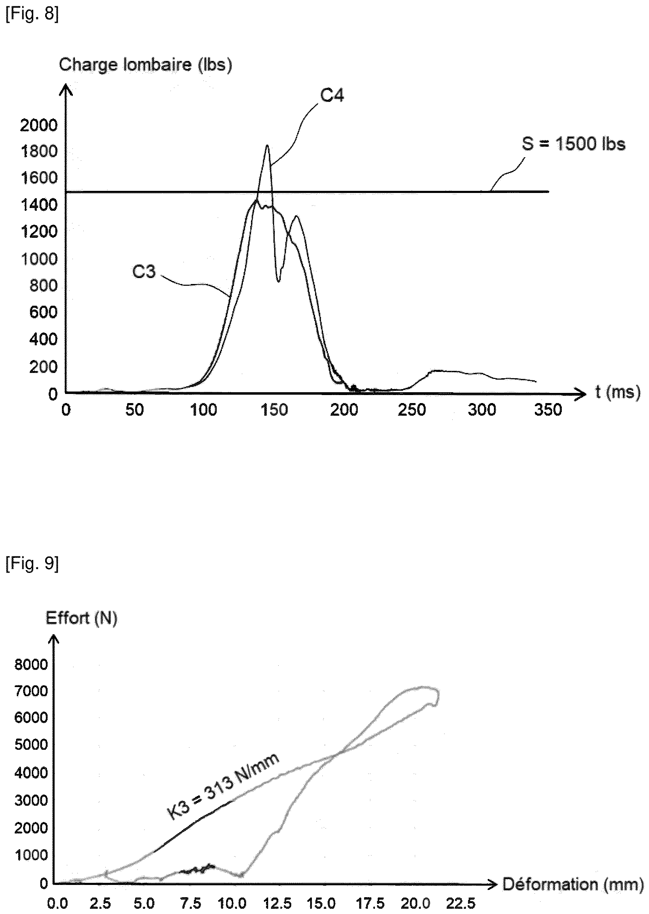

Pour le tube 27 précité réalisé en acier ayant une épaisseur de 2mm et un diamètre de 14mm, la figure 8 met en évidence que la charge lombaire observable lors d'un test "14G-down" est bien en dessous du seuil limite S de 1500 (cf. courbe C3 présentant un sommet à 1452lbs) alors que cette charge lombaire est largement supérieure au seuil limite S pour un siège 42 standard dont l'assise 10 est dépourvue de tube 27 absorbeur d'énergie cinétique (cf. courbe C4).

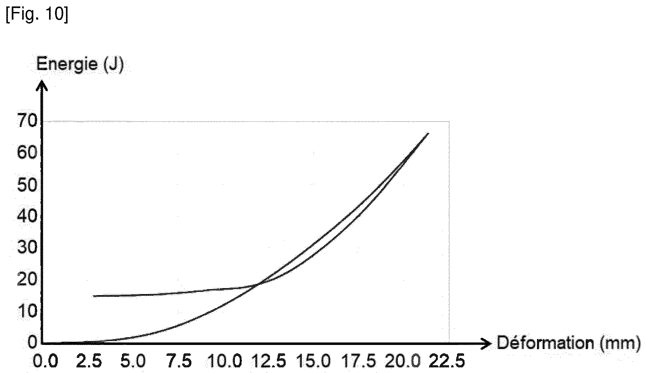

La courbe d'effort en fonction du déplacement du tube 27 absorbeur d'énergie cinétique montrée sur la figure 9 met en évidence une raideur K3 adaptée de l'ordre de 313 N/mm. La courbe d'énergie montrée sur la figure 10 correspond à une intégration de la courbe de la figure 9 par rapport à un déplacement. La courbe d'énergie met en évidence que le tube 27 est capable d'absorber 66 Joules lors du test "14G-Down", ce qui représente environ 75% de l'énergie cinétique du mannequin 49 lors de la décélération.

Dans certains modes de réalisation, il est possible d'utiliser le tube 27 absorbeur d'énergie cinétique sans la configuration d'assise 10 à longerons à écart augmenté localement pour autoriser le passage du bassin, c'est-à-dire de mettre en œuvre une assise 10 dépourvue de portions distales 23.1, 23.2 mais intégrant un tube 27.

Dans certains modes de réalisation, il est possible de prévoir une assise 10 comportant les portions distales 23.1, 23.2 pour faciliter le passage du bassin du mannequin lors du test "14G-down" mais dépourvue de tube 27 absorbeur d'énergie cinétique.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association, dans la mesure où elles entrent dans le cadre des revendications annexées.

## Revendications

1. Assise (10) de siège comportant une structure d'assise (11) comprenant:
- un premier longeron (12.1) comportant une portion d'extrémité avant (13.1) et une portion d'extrémité arrière (14.1),
- un deuxième longeron (12.2) comportant une portion d'extrémité avant (13.2) et une portion d'extrémité arrière (14.2),
- une traverse avant (15.1) reliant mécaniquement entre elles la portion d'extrémité avant (13.1) du premier longeron (12.1) et la portion d'extrémité avant (13.2) du deuxième longeron (12.2), et
- une traverse arrière (15.2) reliant mécaniquement entre elles la portion d'extrémité arrière (14.1) du premier longeron (12.1) et la portion d'extrémité arrière (14.2) du deuxième longeron (12.2),
- chaque longeron (12.1, 12.2) comporte en outre une portion distale (23.1, 23.2) s'étendant entre la portion d'extrémité avant (13.1, 13.2) et la portion d'extrémité arrière (14.1, 14.2) correspondantes,
- un écart (L1) entre le premier longeron (12.1) et le deuxième longeron (12.2) mesuré entre les portions distales (23.1, 23.2) étant supérieur à un écart (L2) entre le premier longeron (12.1) et le deuxième longeron (12.2) mesuré entre les portions d'extrémité avant (13.1, 13.2) et/ou à un écart (L3) entre le premier longeron (12.1) et le deuxième longeron (12.2) mesuré entre les portions d'extrémité arrière (14.1, 14.2),
- chaque portion distale (23.1, 23.2) étant reliée à une portion d'extrémité (13.1, 13.2; 14.1, 14.2) correspondante d'un longeron par l'intermédiaire d'une portion de liaison (24),
**caractérisé en ce que**
- une plateforme (25) est liée mécaniquement à une portion distale (23.1, 23.2) correspondante,
- ladite plateforme (25) est située dans un espace de dégagement délimité par une portion distale (23.1, 23.2) ainsi que les portions de liaison (24) situées à chaque extrémité de la portion distale (23.1, 23.2).

2. Assise selon la revendication 1, **caractérisée en ce qu'**elle comporte en outre un tube (27) absorbeur d'énergie cinétique s'étendant entre le premier longeron (12.1) et le deuxième longeron (12.2).

3. Assise selon la revendication 2, **caractérisée en ce qu'**une première extrémité du tube (27) absorbeur d'énergie cinétique est liée mécaniquement au premier longeron (12.1) et une deuxième extrémité du tube (27) absorbeur d'énergie cinétique est liée mécaniquement au deuxième longeron (12.2).

4. Assise selon la revendication 1, **caractérisée en ce que** la plateforme (25) s'étend dans un prolongement longitudinal de la portion d'extrémité avant (13) et de la portion d'extrémité arrière (14) d'un longeron (12.1, 12.2) correspondant.

5. Assise selon l'une quelconque des revendications 1 à 4, **caractérisée en ce qu'**elle comporte en outre une tôle d'assise (16) recouvrant au moins en partie une surface d'assise délimitée par le premier longeron (12.1) et le deuxième longeron (12.2) ainsi que par la traverse avant (15.1) et la traverse arrière (15.2).

6. Assise selon la revendication 5, **caractérisée en ce que** la tôle d'assise (16) porte au moins un raidisseur (33) s'étendant suivant une direction parallèle aux traverses (15.1, 15.2).

7. Assise selon la revendication 5 ou 6, **caractérisée en ce que** la tôle d'assise (16) comporte au moins un dispositif d'encliquetage (37) destiné à coopérer avec une traverse (15.1, 15.2).

8. Assise selon la revendication 7, **caractérisée en ce que** chaque dispositif d'encliquetage (37) comporte deux pattes (38) élastiquement déformables délimitant une gorge destinée à recevoir une traverse (15.1, 15.2).

9. Assise selon l'une quelconque des revendications 5 à 8, **caractérisée en ce que** la tôle d'assise (16) porte au moins une pièce de butée (41) destinée à venir en appui contre une traverse lorsque l'assise (10) est soumise à un choc vertical.

10. Siège (42) comportant une assise (10) telle que définie selon l'une quelconque des revendications précédentes.

## Patentansprüche

1. Sitzbasis (10) mit einer Sitzbasisstruktur (11), umfassend:
- einen ersten Längselement (12.1) mit einem vorderen Endabschnitt (13.1) und einem hinteren Endabschnitt (14.1),
- einen zweiten Längselement (12.2) mit einem vorderen Endabschnitt (13.2) und einem hinteren Endabschnitt (14.2),
- einen vorderen Querelement (15.1), der den vorderen Endabschnitt (13.1) des ersten Längselements (12.1) und den vorderen Endabschnitt (13.2) des zweiten Längselements (12.2) mechanisch miteinander verbindet, und
- einen hinteren Querelement (15.2), der den hinteren Endabschnitt (14.1) des ersten Längselements (12.1) und den hinteren Endabschnitt (14.2) des zweiten Längselements (12.2) mechanisch miteinander verbindet, wobei
- jedes Längselement (12.1, 12.2) ferner einen sich zwischen dem entsprechenden vorderen Endabschnitt (13.1, 13.2) und hinteren Endabschnitt (14.1, 14.2) erstreckenden distalen Abschnitt (23.1, 23.2) umfasst,
- ein zwischen dem ersten Längselement (12.1) und dem zweiten Längselement (12.2) angeordneter und zwischen den distalen Abschnitten (23.1, 23.2) gemessener Spalt (L1) größer als ein zwischen dem ersten Längselement (12.1) und dem zweiten Längselement (12.2) angeordneter und zwischen den vorderen Endabschnitten (13.1, 13.2) gemessener Spalt (L2) und/oder ein zwischen dem ersten Längselement (12.1) und dem zweiten Längselement (12.2) angeordneter und zwischen den hinteren Endabschnitten (14.1, 14.2) gemessener Spalt (L3) ist,
- jeder distale Abschnitt (23.1, 23.2) über einen Verbindungsabschnitt (24) mit einem entsprechenden Endabschnitt (13.1, 13.2; 14.1, 14.2) eines Längselements verbunden ist,
**dadurch gekennzeichnet, dass**
- eine Plattform (25) mechanisch mit einem entsprechenden distalen Abschnitt (23.1, 23.2) verbunden ist,
- die Plattform (25) in einem Freiraum angeordnet ist, der durch einen distalen Abschnitt (23.1, 23.2) sowie die Verbindungsabschnitte (24) an jedem Ende des distalen Abschnitts (23.1, 23.2) begrenzt wird.

2. Sitzbasis nach Anspruch 1, **dadurch gekennzeichnet, dass** sie außerdem ein kinetische Energie absorbierendes Rohr (27) umfasst, das sich zwischen dem ersten Längselement (12.1) und dem zweiten Längselement (12.2) erstreckt.

3. Sitzbasis nach Anspruch 2, **dadurch gekennzeichnet, dass** ein erstes Ende des kinetische Energie absorbierenden Rohrs (27) mechanisch mit dem ersten Längselement (12.1) verbunden ist und ein zweites Ende des kinetische Energie absorbierenden Rohrs (27) mechanisch mit dem zweiten Längselement (12.2) verbunden ist.

4. Sitzbasis nach Anspruch 1, **dadurch gekennzeichnet, dass** sich die Plattform (25) in Längsverlängerung des vorderen Endabschnitts (13) und des hinteren Endabschnitts (14) eines entsprechenden Längselements (12.1, 12.2) erstreckt.

5. Sitzbasis nach einem der Ansprüche 1 bis 4, **dadurch gekennzeichnet, dass** er außerdem ein Sitzbasisblech (16) umfasst, das zumindest teilweise eine durch das ersten Längselement (12.1) und das zweiten Längselement (12.2) sowie durch das vorderen Querelement (15.1) und das hinteren Querelement (15.2) begrenzte Sitzbasisfläche abdeckt.

6. Sitzbasis nach Anspruch 5, **dadurch gekennzeichnet, dass** das Sitzbasisblech (16) mindestens eine sich in einer Richtung parallel zu den Querelementen (15.1, 15.2) erstreckende Versteifung (33) trägt.

7. Sitzbasis nach Anspruch 5 oder 6, **dadurch gekennzeichnet, dass** das Sitzbasisblech (16) mindestens eine Schnappverschlussvorrichtung (37) zum Zusammenwirken mit einem Querelement (15.1, 15.2) aufweist.

8. Sitzbasis nach Anspruch 7, **dadurch gekennzeichnet, dass** jede Schnappverschlussvorrichtung (37) zwei elastisch verformbare Laschen (38) umfasst, die eine Nut zur Aufnahme eines Querelements (15.1, 15.2) begrenzen.

9. Sitzbasis nach einem der Ansprüche 5 bis 8, **dadurch gekennzeichnet, dass** das Sitzbasisblech (16) mindestens ein Anschlagstück (41) zur Anlage an einem Querelement bei einem vertikalen Stoß auf die Sitzbasis (10) trägt.

10. Sitz (42) mit einer Sitzbasis (10) gemäß einem der vorhergehenden Ansprüche.

## Claims

1. A seating base (10) for a seat comprising a seating base structure (11) comprising:
- a first longitudinal member (12.1) including a front end portion (13.1) and a rear end portion (14.1),
- a second longitudinal member (12.2) including a front end portion (13.2) and a rear end portion (14.2),
- a front cross member (15.1) mechanically connecting the front end portion (13.1) of the first longitudinal member (12.1) and the front end portion (13.2) of the second longitudinal member (12.2) to one another, and
- a rear cross member (15.2) mechanically connecting the rear end portion (14.1) of the first longitudinal member (12.1) and the rear end portion (14.2) of the second longitudinal member (12.2) to one another,
- each longitudinal member (12.1, 12.2) further including a distal portion (23.1, 23.2) extending between the corresponding front end portion (13.1, 13.2) and rear end portion (14.1, 14.2),
- a gap (L1) located between the first longitudinal member (12.1) and the second longitudinal member (12.2) and measured between the distal portions (23.1, 23.2) being greater than a gap (L2) located between the first longitudinal member (12.1) and the second longitudinal member (12.2) and measured between the front end portions (13.1, 13.2) and/or a gap (L3) located between the first longitudinal member (12.1) and the second longitudinal member (12.2) and measured between the rear end portions (14.1, 14.2),
- each distal portion (23.1, 23.2) being connected to a corresponding end portion (13.1, 13.2; 14.1, 14.2) of a longitudinal member by means of a connecting portion (24),
**characterized in that**
- a platform (25) is mechanically linked to a corresponding distal portion (23.1, 23.2),
- said platform (25) is located in a clearance space delimited by a distal portion (23.1, 23.2) as well as the connecting portions (24) at each end of the distal portion (23.1, 23.2).

2. The seating base according to claim 1, **characterized in that** it further comprises a kinetic energy absorbing tube (27) extending between the first longitudinal member (12.1) and the second longitudinal member (12.2).

3. The seating base according to claim 2, **characterized in that** a first end of the kinetic energy absorbing tube (27) is mechanically connected to the first longitudinal member (12.1) and a second end of the kinetic energy absorbing tube (27) is mechanically connected to the second longitudinal member (12.2).

4. The seating base according to claim 1, **characterized in that** the platform (25) extends in a longitudinal extension of the front end portion (13) and the rear end portion (14) of a corresponding longitudinal member (12.1, 12.2).

5. The seat according to any one of the claims 1 to 4, **characterized in that** it further comprises a seating base sheet (16) covering at least in part a seating base surface delimited by the first longitudinal member (12.1) and the second longitudinal member (12.2) as well as by the front cross member (15.1) and the rear cross member (15.2).

6. The seating base according to claim 5, **characterized in that** the seating base sheet (16) carries at least one stiffener (33) extending in a direction parallel to the cross members (15.1, 15.2).

7. The seating base according to claim 5 or 6, **characterized in that** the seating base sheet (16) includes at least one snap-fastening device (37) for cooperating with a cross member (15.1, 15.2).

8. The seating base according to claim 7, **characterized in that** each snap-fastening device (37) includes two elastically deformable tabs (38) delimiting a groove for receiving a cross member s(15.1, 15.2).

9. The seating base according to any one of the claims 5 to 8, **characterized in that** the seating base sheet (16) carries at least one stop piece (41) for bearing against a cross member when the seating base (10) is subjected to a vertical impact.

10. A seat (42) including a seating base (10) as defined according to any one of the preceding claims.
